# EUROPÄISCHE PATENTSCHRIFT

(11) **EP 1 669 961 B1**
(45) Veröffentlichungstag und Bekanntmachung des Hinweises auf die Patenterteilung: **18.06.2014**
(21) Anmeldenummer: 04029121.3
(22) Anmeldetag: 09.12.2004
(51) Int. Cl.: G08B 29/14

(54) **Gasgemisch zur Funktionsprüfung von Rauchmeldern**
Gas mixture for function testing of smoke detectors
Mélange de gaz pour tester le fonctionnement des détecteurs de fumée

(43) Veröffentlichungstag der Anmeldung: 14.06.2006
(73) Patentinhaber: Siemens Aktiengesellschaft, 80333 München (DE)
(72) Erfinder: Forster, Martin, Dr., 8645 Jona (CH)

(56) Entgegenhaltungen:
- EP-A- 0 663 432
- EP-A- 1 241 649
- GB-A- 2 305 917
- US-A- 5 139 699

## Beschreibung

Die Erfindung betrifft ein Gasgemisch zur Funktionsprüfung von Rauchmeldern, bestehend aus einem Treibgas und mindestens einer Aerosolkomponente, welche dem genannten Treibgas in einem Mischverhältnis von maximal 2 Gewichtsprozenten beigemischt ist und aus mindestens einem der Stoffe Sebazinsäure-bis-2-ethyl-hexylester, Sebazinsäure-diester mit diversen Estergruppen, Paraffinöl, Phthalsäure-dibutylester, Phthalsäure-bis-2-ethyl-hexylester und Butyloxyäthanol besteht.

Rauchmelder werden zur Feststellung von Rauchpartikeln oder Aerosolen, die bei einem Brand entstehen können, eingesetzt. Zu den handelsüblichen Rauchmeidern gehören neben lonisationsrauchmeidern insbesondere Streulichtrauchmelder, welche das in einer optischen Messkammer an Rauchpartikeln oder Aerosolen gestreute Licht messen.

Rauchmelder und Rauchmeldersysteme haben meist eine Betriebsdauer von mehren Jahren und erfordern zur Sicherstellung einer einwandfreien Funktion eine periodische Funktions-prüfung, welche in der Regel dadurch erfolgt, dass die Messkammer mit einem Prüfgas beaufschlagt wird, welches ein Aerosol simuliert. So wurden beispielsweise Treibgase mit hohem Molekulargewicht eingesetzt, die ohne Zusatzsubstanzen ein Aerosol zu simulieren vermochten. Ein Treibgasgemisch mit geeignetem Siedepunkt der Komponenten, zwischen -20°C und +10°C, zeigte sich als sehr wirksam und für alle Meldertypen anwendbar. Die meist verwendeten Treibgase waren die vollständig halogenierten Kohlenwasserstoffe, die auch die Bedingungen der Unbrennbarkeit und Ungiftigkeit erfüllten. Eines dieser Gasgemische ist in CH-A-501 284 beschrieben.

Nach der im September 1987 beschlossenen Treaty of Montreal ist aber der Einsatz vollständig halogenierter Kohlenwasserstoffe wegen ihrer schädigenden Wirkung auf die Ozonschicht ab 1995 in allen Ländern verboten, und somit sind auch die obengenannten Treibgase nicht mehr verwendbar.

In dem US-Patent 5,139,699 ist ein Gasgemisch aus einem Treibgas aus Kohlenwasserstoff und aus einem Aerosol zum Testen eines Rauchmelders beschrieben. Das Treibgas weist eine Mischung aus Propan und Isobutan auf. Das Aerosol besteht aus Phthalsäureester, die durch Kohlenstoffketten mit einer Länge von sieben oder neun Kohlenstoffatomen gekennzeichnet sind. Das Aerosol ist dabei mit einem Anteil zwischen 1 % und 10% im Treibgas enthalten.

In der EP-A-0443 912 ist ein Gasgemisch beschrieben, welches der Ozonschicht keinen Schaden zufügt und welches einen Anteil Dimethyläther und einen Anteil 1,1,1,2-Tetrafluor-ethan enthält. Dieses Gemisch erbringt zwar in der Verwendung in Kühlgeräten und als Treibgas gute Resultate, ist aber für die spezielle Verwendung als Prüfgas für Rauchmelder nicht sehr gut geeignet, da es keine Aerosole enthält. Und diese Eigenschaft führt dazu, dass sich durch Abkühlung der Luft Wassertröpfchen bilden können und dadurch eventuell ein Alarm ausgelöst werden kann.

In der EP-B-0 663 432 ist ein Gasgemisch der eingangs genannten Art beschrieben, welches aus 80 bis 60 Gewichtsprozenten 1,1,1,2-Tetrafluorethan und 20 bis 40 Gewichtsprozenten eines druckmindernden Gases besteht, welches aus mindestens einem der Stoffe n-Butan, Isobutan, einer Mischung von Propan/n-Butan, einer Mischung von Propan/Iso-Butan, Dimethyläther (CH₃-O-CH₃), Methylal (CH₃-O-CH₂-CH₃) und Ethylen-Methyläther (CH₃-O-CH-CH₂) besteht. Dieses Gasgemisch enthält eine beigemischte aerosolbildende Komponente, die aus mindestens einem der Stoffe Sebazinsäure-bis-2-ethyl-hexylester, Sebazinsäure-diester mit diversen Estergruppen, Paraffinöl, Phthalsäure-dibutylester, Phthalsäure-bis-2-ethyl-hexylester, Butyloxyäthanol, Triäthylenglykol und Triäthylenglykol-diester besteht und dem Gasgemisch in einem Mischverhätnis von maximal 2 Gewichtsprozenten beigemischt ist.

Das in der genannten EP-B beschriebene Gasgemisch hat sich seit Jahren für die Funktionsprüfung von Rauchmeldern bestens bewährt, enthält aber eine fluorhaltige Substanz, welche vor kurzem in Dänemark verboten worden ist und vermutlich auch in weiteren Ländern verboten werden wird.

Durch die Erfindung soll nun ein Gasgemisch zur Funktionsprüfung von Rauchmeldern geschaffen werden, welches bei gleich guten Eigenschaften wie das in der EP-B-0 663 432 beschriebene Gasgemisch keine fluorhaltige Substanz enthält.

Diese Aufgabe wird erfindungsgemäss dadurch gelöst, dass das Treibgas aus Iso-Butan oder n-Butan oder Propan oder beliebigen Mischungen davon besteht.

Neben der neuen Forderung des Verzichts auf fluorhaltige Substanzen bestanden bisher für Gasgemische zur Funktionsprüfung von Rauchmeldern die Forderungen, dass das Gasgemisch zwischen -10°C und +50°C eine Flüssigkeit und unbrennbar sein, und dass es einen Dampfüberdruck ≤ 11 bar bei +50°C haben muss (Vorschrift für Spraydosen). Da prinzipiell kein Gasgemisch existiert, welches alle diese Forderungen erfüllt, wurde beim erfindungsgemässen Gasgemisch auf die Unbrennbarkeit verzichtet.

Das erfindungsgemässe Gasgemisch ist so wie jeder Farb- und Deospray brennbar und hat gegenüber bekannten Gasgemischen zur Funktionsprüfung von Rauchmeldern eine bessere Standzeit, geringere Herstellungskosten und ein kleineres mittleres Molekulargewicht. Letzteres bedeutet, dass es beim Applizieren schneller in den Melder hinein und beim Absetzen schneller aus dem Melder heraus diffundiert.

Bevorzugte und vorteilhafte Ausführungsformen des erfindungsgemässen Gasgemisches sind in den abhängigen Ansprüchen beansprucht.

Im Folgenden wird das erfindungsgemässe Gasgemisch zur Funktionsprüfung von Rauchmeldern anhand von Ausführungsbeispielen näher beschrieben, wobei das Gasgemisch als "Prüfgas" bezeichnet wird.

Die wesentliche Bedingung für das Prüfgas ist die Schonung der Ozonschicht. Davon ausgehend kommen als Treibgase nur chlorlose Gase in Frage, da das Chlor die Ozonschicht bekannterweise abbaut. Das Prüfgas darf auch keinen nicht vollständig fluorierten Kohlenwasserstoff enthalten, da fluorhaltige Substanzen zumindest in Dänemark verboten sind. Aus diesen Gründen besteht das Treibgas des Prüfgases aus Iso-Butan oder n-Butan oder Propan oder beliebigen Mischungen davon, bevorzugt aus einer 1.1±0.2/0.9±0.2-Mischung (mol/mol) von Iso-Butan und Propan oder aus einer 1.0±0.2/1.0±0.2-Mischung (mol/mol) von n-Butan und Propan.

Die mindestens eine Aerosolkomponente des Prüfgases enthält mindestens einen der folgenden Stoffe:
- Sebazinsäure-bis-2-ethyl-hexyl-ester
- Sebazinsäure-diester mit diversen Estergruppen
- Paraffinöl
- Phthalsäure-dibutylester
- Phthalsäure-bis-ethyl-hexylester
- Butyloxyäthanol
wobei der Gesamtanteil aller Aerosol-komponenten ≤ 2 Gewichtsprozent beträgt. Allgemein ist der Anteil der Aerosolkomponenten ≤ 0.5 Gewichtsprozent, bei einer bevorzugten Ausführungsform des Prüfgases liegt er zwischen 0.001 Gewichtsprozent und 0.3 Gewichtsprozent.

Das Prüfgas wird in einen Druckbehälter von der Art einer üblichen Prüfgasdose eingefüllt, welcher in ein Melderprüfgerät des Typs REG der Siemens Schweiz AG, Building Technologies Group (früher Cerberus AG) eingesetzt wird. Für den Prüfvorgang wird der Melderprüfer über den Melder geschoben. Durch Andrücken des Melderprüfers an den Melder wird das Prüfgas auf den Melder gesprüht, strömt in dessen Messkammer und simuliert so das Vorhandednsein von Brandaerosolen.

Praktische Versuche der Funktionsprüfung von Ionisationsrauchmeldern und von optischen Rauchmeldern mit dem erfindungsgemässen Prüfgas haben zu folgenden Ergebnissen geführt:
- Das neue Treibgas ergibt bei gleicher Sprühzeit aber kleinerer Konzentration der mindestens einen Aerosolkomponente ein relativ lang lebiges Aerosol und es werden grössere Streusignale gemessen als bei bekannten Prüfgasen.
- Das Aerosol dringt wegen seines geringen Molekulargewichts rasch in die Messkammer des Melders ein und diffundiert nach dem Absetzen der Prüfung rasch aus diesem heraus.
- Bei ähnlicher Konzentration der Aerosolkomponente ergibt Iso-Butan ein weniger lang lebendes Aerosol als Propan.

## Patentansprüche

1. Gasgemisch zur Funktionsprüfung von Rauchmeldern, bestehend aus einem Treibgas und mindestens einer dem Treibgas beigemischten Aerosolkomponente, wobei das Treibgas aus Iso-Butan oder n-Butan oder Propan oder beliebigen Mischungen davon besteht,
**dadurch gekennzeichnet,**
- **dass** die mindestens eine Aerosolkomponente aus mindestens einem der Stoffe Sebazinsäure-bis-2-ethyl-hexylester, Sebazinsäure-diester mit diversen Estergruppen, Paraffinöl, Phthalsäure-dibutylester, Phthalsäure-bis-2-ethyl-hexylester und Butyloxyäthanol besteht und
- **dass** der Anteil aller Aerosolkomponenten nicht grösser als 0.5 Gewichtsprozent ist.

2. Gasgemisch nach Anspruch 1, **dadurch gekennzeichnet, dass** das Treibgas aus einer 1.1±0.2/0.9±0.2-Mischung (mol/mol) von Iso-Butan und Propan besteht.

3. Gasgemisch nach Anspruch 1, **dadurch gekennzeichnet, dass** das Treibgas aus einer 1.0±0.2/1.0±0.2-Mischung (mol/mol) von n-Butan und Propan besteht.

4. Gasgemisch nach einem der vorigen Ansprüche, **dadurch gekennzeichnet, dass** der Anteil aller Aerosolkomponenten zwischen 0.001 Gewichtsprozent und 0.3 Gewichtsprozent liegt.

## Claims

1. Gas mixture for testing the functioning of smoke detectors, consisting of a propellant gas and at least one aerosol component that is admixed to said propellant gas, wherein the propellant gas consists of iso-butane or n-butane or propane or any given mixtures thereof,
**characterised in that**
- the at least one aerosol component consists at least of one of the materials sebacic acid-bis-2-ethyl-hexylester, sebacic acid-diester containing diverse ester groups, paraffin oil, dibutyl phthalate, phthalic acid-bis-2-ethyl-hexylester and butyloxyethanol and
- the mixing ratio of all of the aerosol components is not greater than 0.5 percent by weight.

2. Gas mixture according to claim 1, **characterised in that** the propellant gas consists of a 1.1±0.2/0.9±0.2 mixture (mol/mol) of iso-butane and propane.

3. Gas mixture according to claim 1, **characterised in that** the propellant gas consists of a 1.0±0.2/1.0±0.2 mixture (mol/mol) of n-butane and propane.

4. Gas mixture according to one of the preceding claims, **characterised in that** the proportion of all aerosol components lies between 0.001 percent by weight and 0.3 percent by weight.

## Revendications

1. Mélange de gaz pour tester le fonctionnement de détecteurs de fumée, constitué d'un gaz propulseur et d'au moins un constituant d'aérosol mélangé avec le gaz propulseur, dans lequel le gaz propulseur est constitué d'isobutane ou de n-butane ou de propane ou de mélanges quelconques de ceux-ci,
**caractérisé en ce que**
- l'au moins un constituant d'aérosol est constitué d'au moins une des substances bis-2-éthyl-hexylester d'acide sébacique, diester d'acide sébacique avec divers groupes ester, huile de paraffine, dibutylester d'acide phtalique, bis-2-éthyl-hexylester d'acide phtalique et butyloxyéthanol et
- la part de tous les constituants d'aérosol ne dépasse pas 0,5 pour cent en poids.

2. Mélange de gaz selon la revendication 1, **caractérisé en ce que** le gaz propulseur est constitué d'un mélange d'isobutane et de propane à hauteur de 1,1 ± 0,2/0,9 ± 0,2 (mol/mol).

3. Mélange de gaz selon la revendication 1, **caractérisé en ce que** le gaz propulseur est constitué d'un mélange de n-butane et de propane à hauteur de 1,0 ± 0,2/1,0 ± 0,2 (mol/mol).

4. Mélange de gaz selon l'une des revendications précédentes, **caractérisé en ce que** la part de tous les constituants d'aérosol se situe entre 0,001 pour cent en poids et 0,3 pour cent en poids.
